# EUROPEAN PATENT SPECIFICATION

(11) **EP 1 172 304 B1**
(45) Date of publication and mention of the grant of the patent: **17.03.2004**
(21) Application number: 00119414.1
(22) Date of filing: 12.09.2000
(51) Int. Cl.: B65D 43/02, B65D 45/20, B29C 45/00

(54) **Plastic made rectangular airtight container for food**
Luftdichter rechteckiger Lebensmittelbehälter aus Kunststoff
Récipient rectangulaire en plastique étanche à l'air pour des produits alimentaires

(30) Priority: 15.07.2000 KR 2000040798
(43) Date of publication of application: 16.01.2002
(73) Proprietor: Hana Cobi Co., Ltd., Namdong-ku, Incheon (KR)
(72) Inventor: Kim, Chang-Ho, Yonsoo-ku, Incheon (KR)
(74) Representative: Müller-Boré & Partner Patentanwälte

(56) References cited:
- US-A- 3 937 326
- US-A- 4 079 880
- PATENT ABSTRACTS OF JAPAN vol. 012, no. 113 (M-683), 9 April 1988 (1988-04-09) & JP 62 240521 A (MATSUSHITA ELECTRIC IND CO LTD), 21 October 1987 (1987-10-21)

## Description

### BACKGROUND OF THE INVENTION

The present invention relates to a plastic made rectangular airtight container for food.

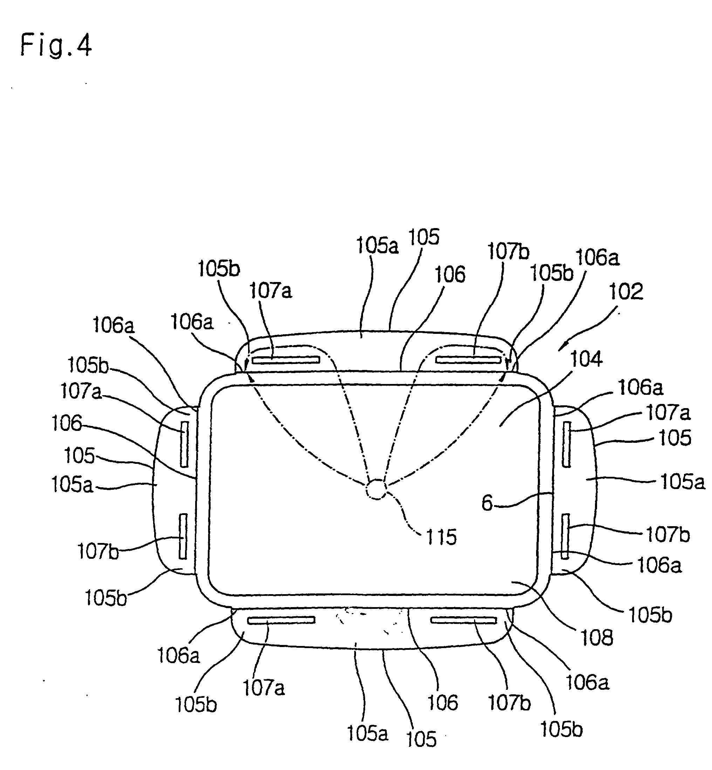

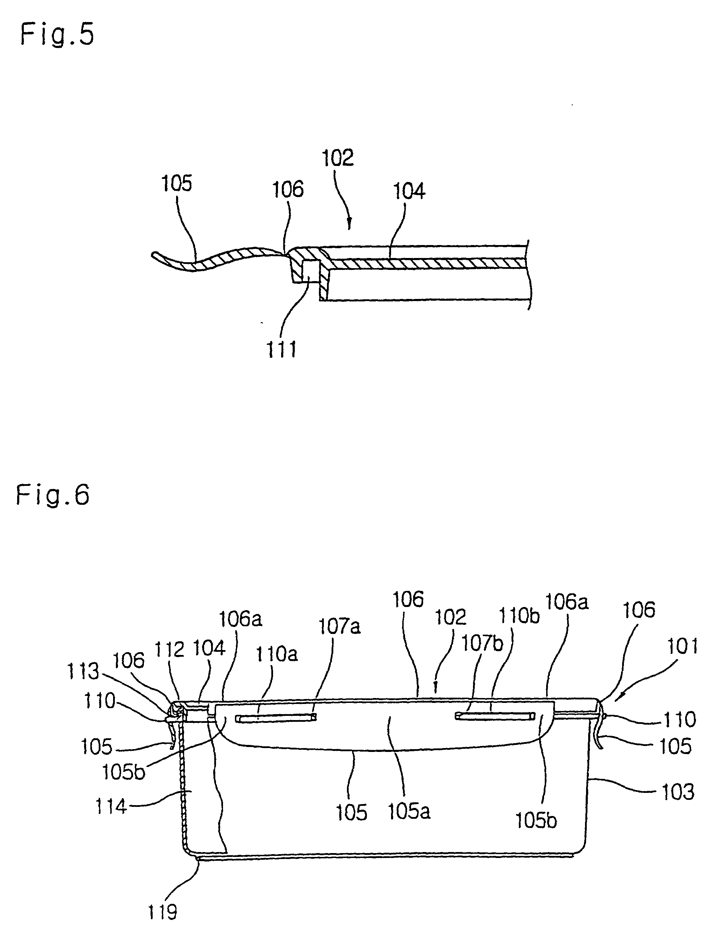

As a container for containing and storing the food, a plastic made airtight container 101 as shown in Fig.4 to Fig.6 is widely used.

This plastic made airtight container 101 consists of container main body 103 and lid 102, a plurality of locking projections 110 are projected at top portion of the container main body 103, and locking wing pieces 105 to be folded and unfolded by hinge 106, more correctly expressing, which is allowed to rotatively move around hinge 106 are formed integrally with top lid surface 104 of the lid 102, and locking holes 107 to be inserted and locked to locking projections 110 are formed to the locking wing pieces 105 at a position corresponding to each locking projection 110 respectively.

And, a recess 111 is formed at top lid surface 104 of lid 102 which will be confronted to top edge 113 of the container main body 103, and a packing 112 is inserted into groove 111 thereof.

Accordingly, when the lid 102 is covered to the container main body 103 and a finger pressing portion 105a is pressed by finger, i. e. , when the locking wing piece 105 is pressed toward the locking projection 110 of the container main body 103, the locking projections 110 are locked by passing through locking holes 107 respectively, at this moment, since the top edge 113 presses the packing 112, an interior space 114 of the container main body 103 is hermetically sealed against exterior.

However, in accordance with above described airtight container 101, the locking wing piece 105 is connected by hinge 106 which is a portion being decreased very much in thickness, and since the hinge 106 has to be folded and unfolded by the locking wing piece 105, a bending stress is repeatedly operated and therefore it is very much weak.

On the other hand, as shown in drawings, in case of elongate rectangular airtight container 101, and in case when a length of one side is more than 10 cm, the locking hole 107 of the locking wing piece 101 and the locking projection 110 of the container main body 103 are made by twos at two sides of locking wing pieces 105 so as to secure sufficient locking force and uniformity of hermetical sealing force (airtight force).

In case of this rectangular airtight container 101 lid 102, since a plastic molten liquid pouring gate 115 is formed to an injection metal mold corresponding to a right center of the lid 102 upon plastic injection molding, in a process in which a plastic molten liquid is spread out to every direction from a molten liquid pouring gate 115 of its center and then it fills up the cavity of metal mold whereby the lid 102 is made, reaching times are different in which the plastic molten liquid is spread out to each end terminal portion, and according to this, since the molten liquid is flowed to counter direction each other whereby making collision and forming weld line, strength weakened portion becomes formed.

By the way, since both end terminal portions 105b of the locking wing piece 105 are most distanced far away from the molten liquid pouring gate 115 whereby the molten liquid reaching time is required most, and since a gorge portion 105b is formed due to the locking hole 107, the gorge portion 105b operates as a resistive means for the molten liquid flow whereby the flow of molten liquid flow is stagnated, on the other hand, for a center portion between both side locking holes 107, since a distance from the molten liquid pouring gate 115 is nearer and a clearance is wider and a flowing resistance is less, a flow of molten liquid becomes smooth whereby the flow of molten liquid is occurred as shown by arrows, and thereby a case is frequently occurred in which the molten liquid makes collision each other at hinge end portion 106a being both end terminal portions of the hinge 106 whereby forming a weld line (generally the weld line is formed at the hinge end terminal portion at rate of 5 - 15%).

When the weld line formed by which molten liquid has collided one another is formed to hinge end portion 106a, thin hinge end portion 106a becomes forming a crack portion and easily torn out and damaged at a time when the locking wing piece portion 105 is repeatedly folded and unfolded, and once the hinge end portion 106a is torn out even a little, it is continuously spread out whereby life of airtight container 101 is outstandingly decreased, and this dissatisfaction of consumer has been pointed out as a most big problem, however this quality inferiority of product can not be confirmed at manufactured state, and since a problem would be appeared after a predetermined time is past during a consumer using the product (but in a further short time than regular life of the product), it is pointed out as a big blind point for consumer protection.

### BRIEF DESCRIPTION OF THE DRAWINGS

Fig.1 is a view showing a lid of plastic made airtight container for food in accordance with the present invention,
Fig.2 is a cross sectional view of the lid of above,
Fig.3 is a view showing a rectangular airtight container which is assembled and tightened with lid and container main body in accordance with the present invention, and
Fig.4 to Fig.6 are views showing conventional rectangular airtight container.

### OBJECT AND SUMMARY OF THE INVENTION

Therefore, the present invention is offered in considering such a problem as above, and it is an object of the present invention is to provide a plastic made rectangular airtight container for food of construction in which a flow of plastic molten liquid is induced to be smoothly and uniformly occurred to every direction and a weld line is produced to body portion having no influence in strength by avoiding hinge portion repeatedly operated with bending stress.

In order to attain above described object, the present invention is,

A plastic made rectangular airtight container for food constructed by comprising :
a rectangular container main body in which length of one side is longer than other side;
a plurality of locking projections in which one or two projections are formed at four side of the container main body respectively, but two are formed with predetermined distance from each other at least at long length side;
a lid consisting of locking wing piece portion in which locking hole for locking by inserting corresponding locking projection is formed, and top cover piece to which the locking wing piece is rotatably connected by hinge;
a packing which is mounted to top cover piece of the lid and hermetically seals the container main body;
characterized by a molten liquid flow intercepting hole for forming a gorge between locking holes formed at two places, right and left of the locking wing piece is defined, so that the plastic molten liquid is induced to flow to both gorges by bypassing the molten liquid flow intercepting hole.

### DETAILED DESCRIPTION OF THE PREFERRED EMBODIMENTS

Hereinafter, a preferred embodiment of the present invention will be described more in detail with reference to the accompanying drawings.

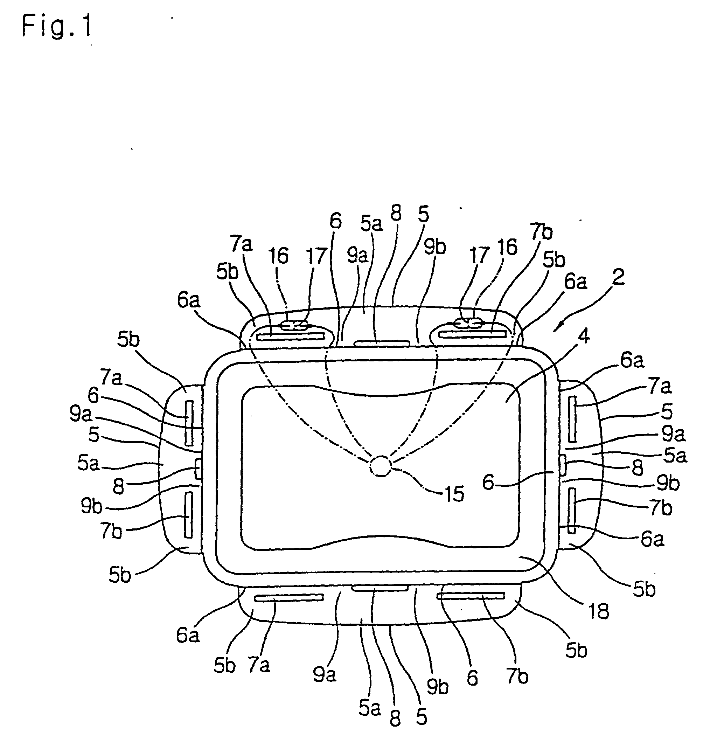

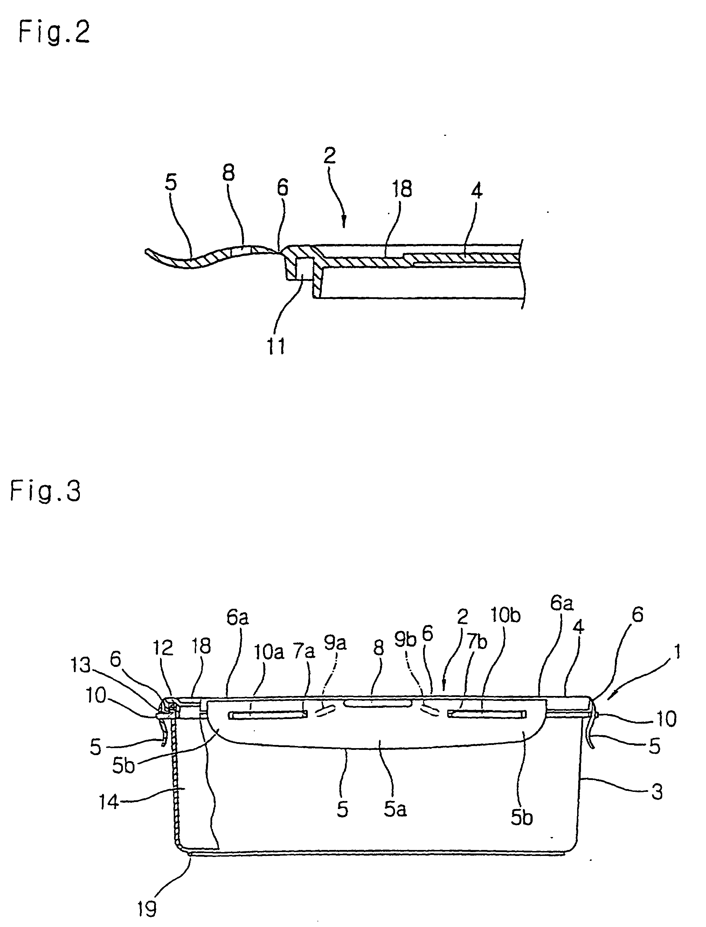

Fig.1 is a view showing a lid of plastic made rectangular airtight container for food in accordance with the present invention, Fig.2 is a cross sectional view of lid of above in accordance with the invention, and Fig.3 is a view showing a rectangular airtight container of a state that a lid of the invention hermetically sealed the container main body.

In the drawings, a reference numeral symbol 1 is a rectangular airtight container and consists of a lid 2 and a container main body 3.

The container main body 3 is a form of elongate rectangular in cross section in which length of one side is longer than other side, and the lid 2 and the container main body 3 are made by injection molding with plastic material (including silicon).

The lid 2 consists of top cover surface 4, and locking wing pieces 5 extended respectively to every direction from the top cover surface 4, and the locking wing pieces 5 are made to a construction connected to top cover surface 4 by hinge 6 which are very thinner in thickness relative to other portion so that the locking wing pieces 5 are allowed to have a rotatable movement by the hinge 6.

And, locking holes 7a, 7b (they are represented by reference numeral 7 when expressing as representative) are formed, and this locking hole 7 is made as a form in which length ℓ is longer than width 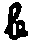 .

And, for the locking hole 7, at least two holes 7a, 7b are formed at both sides of the locking wing piece 5 to a side being long in length of the container, and a molten liquid flow intercepting hole 8 is formed between said two locking holes 7a, 7b.

Gorges 9a, 9b are formed between the molten liquid flow intercepting hole 8 and the locking holes 7a, 7b located at both sides thereof.

And, locking projections 10a, 10b (depicted by reference numeral 10 when representatively expressed) are respectively formed to be projected to every directional surface of top portion of the container main body 3 which are positions confronting to these locking holes 7a, 7b.

According to this, when the locking wing piece 5 is pressed and sticked toward the locking projection 10, the locking hole 7 is inserted to the locking projection 10 and the lid 2 is assembled to the container main body 10, and in a state that the lid 2 is assembled by locking, a packing 12 inserted to groove 11 is pressed by top end edge 13 of the container main body 3 so as to hermetically seal the container main body 3 interior 14.

In accordance with the present invention as this, since a molten liquid flow intercepting hole 8 is formed to the locking wing piece 5 of the lid 2 and according to this differently from before and gorges 9a, 9b are formed, following operation is done when injection molding would be executed by a metal mold.

A shape being identical with the lid 2 is formed for a cavity to the metal mold which is not shown, and when plastic molten material is poured through the molten liquid pouring gate 15 formed to the metal mold being a central position of the lid 2, molten resin is spread out to every direction.

At this moment, when the molten liquid spreading from the molten liquid pouring gate 15 is reached to the molten liquid flow intercepting hole 8 being nearest from the gate 14, a flow is occurred by bypassing the intercepting hole 8 after blocked by the intercepting hole 8, and since both sides of the intercepting hole 8 form the locking holes 7a, 7b and the narrow gorges 9a, 9b, a flow of the molten liquid is not smooth, and when passing the gorge 9, a pressing portion (5a, a portion to be pressed by hand when shutting the lid) of broad area is appeared, and a time is required for which the molten liquid fills the pressing portion 5a and flows to both ends 5b of the locking wing piece 5.

On the other hand, since a flow of molten liquid is delayed when passing the gorges 9a, 9b even but a distance from the molten liquid pouring gate 15 of center to both ends 5b, 5b of the locking wing piece 5 is farer away than a distance up to the molten liquid flow intercepting hole 8, the molten liquid passed the gorges 9a, 9b and the both ends 5b, 5b is collided and met at a portion of reference numeral 16 as shown, so that the weld lines 17, 17 are formed at reference numeral 16 portion by avoiding both ends 6a, 6a of the hinge 6 different from before. Thus, when the weld line 17 is formed at reference numeral 16 by moving from both ends positions 6a, 6b of the hinge portion 6, the hinge portion 6 is not easily damaged and originally designed life can be kept even if the locking wing piece 5 is repeatedly folded and unfolded for long time for mounting the lid 2.

On the other hand, the molten liquid flow intercepting hole 8 is formed in long in length relative to width, and when it is formed along with hinge line 6, entire length of the hinge 6 is shortened and a resilient force operated to the locking wing piece 5 is decreased whereby making an assembling of lid to be easy, and a remaining stress to the hinge 6 is decreased whereby a damage coming from bending of hinge 6 being weakest is decreased.

And, as shown in Fig.3, a corrosion processed portion 18 is made to a portion sunk less than a surface along an outline, so that a scar generation to lid according to contact among containers is prevented upon stacking or storing and transporting by stacking so as the supporting protrusion protruded at bottom of container main body 3 to be contacted to the corrosion processed portion 18, and since the corrosion processed portion 18 is formed as corresponding surface is coarse and opaque upon injection molding by giving fine scars by jetting sand via a method as sand blast to the metal mold, a generation of scratching and the like is not occurred relative to slick transparent portion, and if scratched, its indication is not appeared so well.

In accordance with the present invention as above, a molten liquid flow intercepting hole is formed between two locking holes formed to locking wing piece of plastic made rectangular airtight container whereby gorge is made, so that a change of moving time of molten material is brought at a time when a plastic molten material such as silicon or special synthetic resin is poured and injected to metal mold and thereby weld line is formed by avoiding the binge portion which is thin and weak and receiving a repeated bending stress, therefore the lid can be used as designed life without damage during using whereby dissatisfaction of consumer can be solved, and there is effect to extend a using life by decreasing a remaining stress to the hinge portion.

## Claims

1. A plastic made rectangular airtight container (1) for food including :
a rectangular container main (3) body in which length of one side is longer than other side;
a plurality of locking projections (10) in which one or two projections are formed respectively at four sides of the container main body but two are formed with predetermined distance from each other at least at long length side;
a lid (2) consisting of locking wing piece portion (5) in which locking hole for locking by inserting corresponding locking projection is formed, and top cover piece (4) to which the locking wing piece is rotatably connected by hinge (6)
a packing (12) which is mounted to top cover piece of the lid and hermetically seals the container main body,
**characterized by** a molten liquid flow intercepting hole (8) for forming a gorge (9) between locking holes formed at two places, right and left, of the locking wing piece so that the plastic molten liquid is induced to flow to both gorges by bypassing the molten liquid flow intercepting hole.

2. A plastic made rectangular airtight container for food as defined in claim 1, wherein said molten liquid flow intercepting hole is formed along hinge portion so that entire line length of the hinge portion is shortened.

3. A plastic made rectangular airtight container for food as defined in claim 1 or 2, wherein a supporting protrusion (19) of rectangular ring shape is formed to bottom of the container main body, and corrosion processed portion (18) formed by corroding a surface to be coarse and opaque is provided to top cover surface of the lid which contacts said supporting protrusion.

## Patentansprüche

1. Luftdichter, rechteckiger Lebensmittelbehälter (1) aus Kunststoff, beinhaltend:
einen rechteckigen Behälterhauptkörper (3), in welchem die Länge einer Seite länger als eine andere Seite ist;
eine Mehrzahl von Verriegelungsvorsprüngen (10), in welchen einer oder zwei Vorsprünge jeweils an vier Seiten des Behälterhauptkörpers ausgebildet sind, jedoch zwei in einem vorbestimmten Abstand voneinander wenigstens an einer langen Seite ausgebildet sind;
einen Deckel (2), bestehend aus einem Verriegelungsflügelstück-Abschnitt (5), in welchem ein verriegelndes bzw. Verriegelungsloch zum Verriegeln durch Einsetzen eines entsprechenden Verriegelungsvorsprungs ausgebildet ist, und einem oberen Abdeckstück (4), an welchem das Verriegelungsflügelstück drehbar durch ein Scharnier bzw. Gelenk (6) verbunden ist;
eine Verpackung (12), welche an dem oberen Abdeckstück des Deckels festgelegt ist und hermetisch den Behälterhauptkörper abdichtet,
**gekennzeichnet durch** ein Unterbrechungsloch (8) für geschmolzene Flüssigkeit, um eine Kehle bzw. Rille (9) zwischen Verriegelungslöchem, die an zwei Stellen rechts und links von dem Verriegelungsflügelstück ausgebildet sind, so auszubilden, daß die geschmolzene Kunststoffflüssigkeit veranlaßt ist, zu beiden Rillen **durch** Umgehen des Unterbrechungslochs für geschmolzene Flüssigkeit zu strömen bzw. zu fließen.

2. Luftdichter, rechteckiger Lebensmittelbehälter aus Kunststoff nach Anspruch 1, worin das Unterbrechungsloch für geschmolzene Flüssigkeit entlang eines Gelenkabschnitts so ausgebildet ist, daß eine gesamte Linienlänge des Gelenkabschnitts verkürzt ist.

3. Luftdichter, rechteckiger Lebensmittelbehälter aus Kunststoff nach Anspruch 1 oder 2, worin ein abstützender bzw. Supportvorsprung (19) mit rechteckiger Ringform an dem Boden des Behälterhauptkörpers ausgebildet ist, und ein Korrosions-bearbeiteter Abschnitt (18), der durch Korrodieren einer Oberfläche ausgebildet ist, um rauh und opak zu sein, an der oberen Abdeckoberfläche des Deckels ausgebildet ist, welche den Abstützvorsprung kontaktiert.

## Revendications

1. Récipient rectangulaire en matière plastique étanche à l'air (1) pour produits alimentaires, comprenant :
un corps principal de récipient rectangulaire (3) dont la longueur d'un côté est plus grande que celle de l'autre côté ;
une pluralité de pattes de verrouillage (10) comportant une ou deux pattes (10) formées sur les quatre côtés du corps principal de récipient respectivement, mais deux de ces pattes sont formées à une distance prédéterminée l'une de l'autre au moins sur le grand côté ;
un couvercle (2) constitué d'une ailette de verrouillage (5), dans laquelle est formé un trou de verrouillage pour verrouillage par insertion d'une patte de verrouillage correspondante, et d'une partie de couverture supérieure (4) à laquelle l'ailette de verrouillage est reliée de façon pivotante par une charnière (6) ;
un joint d'étanchéité (12) qui est monté sur la partie de couverture supérieure du couvercle et qui isole hermétiquement le corps principal de récipient ;
**caractérisé en ce qu'**un trou d'interception d'écoulement de matière plastique fondue liquide (8) est prévu de manière à définir un passage étroit (9) entre les trous de verrouillage formés à deux endroits, à droite et à gauche, de l'ailette de verrouillage, de sorte qu'un écoulement de matière plastique fondue liquide par les deux passages étroits est induit par contournement du trou d'interception d'écoulement de matière plastique fondue liquide.

2. Récipient rectangulaire en matière plastique étanche à l'air pour produits alimentaires selon la revendication 1, dans lequel le dit trou d'interception d'écoulement de matière plastique fondue liquide est formé le long de la charnière de sorte que la longueur totale de la charnière est réduite.

3. Récipient rectangulaire en matière plastique étanche à l'air pour produits alimentaires selon la revendication 1 ou 2, dans lequel une saillie de support (19) de forme annulaire rectangulaire est formée à la base du corps principal de récipient, et une partie traitée par abrasion (18) formée par abrasion d'une surface de manière à être rugueuse et opaque est prévue dans la surface de couverture supérieure du couvercle qui vient en contact avec la dite saillie de support.
